# EUROPEAN PATENT SPECIFICATION

(11) **EP 3 797 953 B1**
(45) Date of publication and mention of the grant of the patent: **20.09.2023**
(21) Application number: 19884315.3
(22) Date of filing: 15.11.2019
(51) Int. Cl.: G05B 19/418, G05B 17/02, B28D 5/00

(54) **METHOD AND APPARATUS FOR SIMULATING PRODUCTION TIME OF WAFER SLICER**
VERFAHREN UND VORRICHTUNG ZUR SIMULATION DER PRODUKTIONSZEIT EINES WAFERSCHNEIDERS
PROCÉDÉ ET APPAREIL POUR SIMULER LE TEMPS DE PRODUCTION D'UNE TRANCHEUSE DE PLAQUETTE

(30) Priority: 16.11.2018 CN 201811368157
(43) Date of publication of application: 31.03.2021
(73) Proprietor: Yinchuan Longi Silicon Materials Co. Ltd., Yinchuan, Ningxia 750021 (CN)
(72) Inventor: ZHAO, Nan, Yinchuan, Ningxia 750021 (CN); LUO, Xiangyu, Yinchuan, Ningxia 750021 (CN); WANG, Huizhi, Yinchuan, Ningxia 750021 (CN); RAN, Ruiying, Yinchuan, Ningxia 750021 (CN); QI, Chengtian, Yinchuan, Ningxia 750021 (CN); WANG, Xuerong, Yinchuan, Ningxia 750021 (CN); JIN, Xue, Yinchuan, Ningxia 750021 (CN)
(74) Representative: Loo, Chi Ching
(86) International application number: PCT/CN2019/118911
(87) International publication number: WO 2020/098800

(56) References cited:
- CN-A- 104 346 492
- CN-A- 104 793 983
- CN-A- 105 808 809
- CN-A- 106 599 336
- CN-A- 109 624 108
- JP-A- 2003 323 205
- US-A1- 2010 057 429
- US-A1- 2015 205 893
- US-B1- 6 802 045

## Description

The present application claims the priority of the Chinese patent application filed on November 16th, 2018 before the Chinese Patent Office with the application number of 201811368157.4 and the title of "METHOD AND APPARATUS FOR SIMULATING PRODUCTION TIME OF WAFER SLICER".

### TECHNICAL FIELD

The present disclosure relates to the technical field of the slicing production of silicon wafers in the field of photovoltage, and particularly relates to a method and device for simulating a production duration of a silicon-wafer slicer.

### BACKGROUND

The silicon-wafer slicing technique is of vital importance in the field of materials for photovoltaic cells, and the slicing technique has long been a research hotspot in the photovoltaic industry. The process of the processing of solar-energy-grade silicon wafers is a processing process in which the slicer is the core element and the labor, the machinery and the materials are fully integrated. In the current solar-energy-grade silicon-wafer processing, the operating labor complete all of the process steps including loading, rinsing, replacing the diamond wire, replacing the guide pulley, dealing with a broken line and so on. However, it is a prevalent problem in the industry how to effectively improve the production efficiency with the generally unchanged labor power. All of the traditional practices of man-machine operation analysis are based on field experience and manual analysis, and lack scientific data support and calculation. US 6802045 B1 discloses a method and apparatus for integrating a simulation environment into a semiconductor manufacturing process environment. US 2015/205893 A1 discloses a method for simulation of an automated industrial plant.

### SUMMARY

The technical problem that the present disclosure seeks to solve is to provide a method and device for simulating a production duration of a silicon-wafer slicer, by calculating, by using historical data, by simulation, to obtain the time consumption of the slicing stage, to provide scientific support and calculation for man-machine operation analysis.

The invention is set out in the appended set of claims.

The present disclosure can solve the problems in the production management and organization pattern of solar-energy crystalline-silicon slicing, by modeling the silicon-wafer slicing process and performing simulation calculation to simulate the practical problems in the slicing process, and calculating, by using historical data, by simulation, to obtain the time consumption of the slicing stage, to provide scientific support and calculation for man-machine operation analysis.

The above description is merely a summary of the technical solutions of the present disclosure. In order to more clearly know the elements of the present disclosure to enable the implementation according to the contents of the description, and in order to make the above and other purposes, features and advantages of the present disclosure more apparent and understandable, the particular embodiments of the present disclosure are provided below.

### BRIEF DESCRIPTION OF THE DRAWINGS

In order to more clearly illustrate the embodiments of the present disclosure or the technical solutions in the prior art, the figures that are required to describe the embodiments or the prior art will be briefly introduced below. Apparently, the figures that are described below are embodiments of the present disclosure, and a person skilled in the art can obtain other figures according to these figures without paying creative work.
Fig. 1 is a flow chart of the method for simulating a production duration of a silicon-wafer slicer according to the present disclosure;
Fig. 2 is a schematic diagram of an apparatus for simulating a production duration of a silicon-wafer slicer according to the present disclosure; and
Fig. 3 is a schematic diagram of the device for simulating a production duration of a silicon-wafer slicer according to the present disclosure.

### DETAILED DESCRIPTION

In order to make the objects, the technical solutions and the advantages of the embodiments of the present disclosure clearer, the technical solutions of the embodiments of the present disclosure will be clearly and completely described below with reference to the drawings of the embodiments of the present disclosure. Apparently, the described embodiments are merely certain embodiments of the present disclosure, rather than all of the embodiments. All of the other embodiments that a person skilled in the art obtains on the basis of the embodiments of the present disclosure without paying creative work fall within the protection scope of the present disclosure.

In the method for simulating a production duration of a silicon-wafer slicer according to the present disclosure, the device, based on analogue simulation, firstly constructs a slicer simulating model, constructs process-step data for the various process steps in the slicing process, according to a predetermined rule, obtains process-step-to-be-executed datum, executes sequentially the process steps in the process-step-to-be-executed data, and obtains the sum of the duration data of the process steps. By simulating the slicing process of the practical production, the method can obtain the time consumptions of the process steps and the sum of the durations for completing the slicing process, and calculate, by using historical data, by simulation, to obtain the time consumption of the slicing stage, to provide scientific support and calculation for man-machine operation analysis.

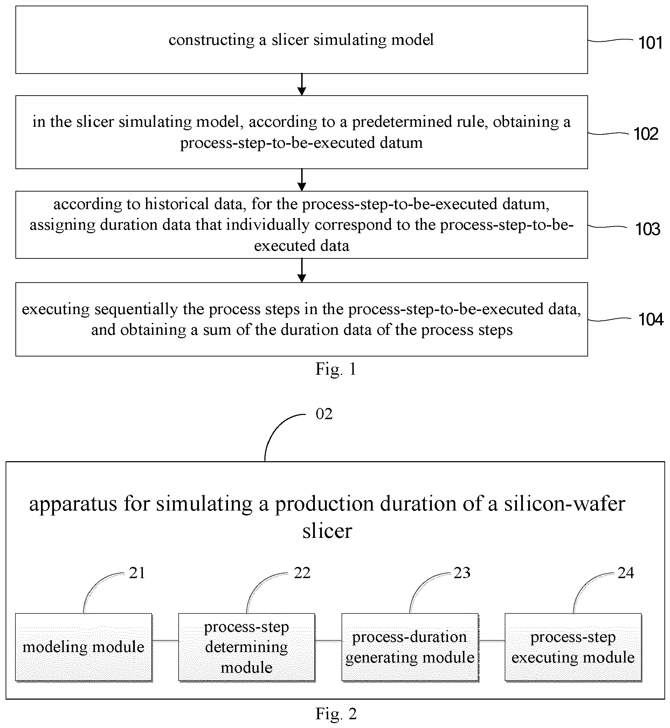

Fig. 1 shows the particular process of the simulation of the production duration of the silicon-wafer slicer by the device for simulating a production duration of a silicon-wafer slicer (hereinafter referred to for short as the device), comprising the steps of:
Step 101: constructing a slicer simulating model.

The device constructs a slicer simulating model. The slicer simulating model comprises process-step data of the slicer. The process-step data include: a loading process step, a cutting process step, a discharging process step, a rinsing process step, a waiting process step, a broken-line replacing process step, a guide-pulley replacing process step, a home-roll replacing process step and a paying-off wheel replacing process step.

Step 102: in the slicer simulating model, according to a predetermined rule, obtaining a process-step-to-be-executed datum.

The device, in the slicer simulating model, according to a predetermined rule, obtains process-step-to-be-executed datum.

Step 103: according to historical data, for the process-step-to-be-executed datum, assigning duration data that individually correspond to the process-step-to-be-executed data, wherein the historical data include: historical duration data that individually correspond to the process-step data of the slicer.

The device, according to historical data, for the process-step-to-be-executed datum, assigns duration data that individually correspond to the process-step-to-be-executed data, wherein the historical data include: historical duration data that individually correspond to the process-step data of the slicer.

Step 104: executing sequentially the process steps in the process-step-to-be-executed data, and obtaining a sum of the duration data of the process steps.

The device executes sequentially the process steps in the process-step-to-be-executed data, and obtains the sum of the duration data of the process steps.

By using the above solution, the device, based on analogue simulation, firstly constructs a slicer simulating model, constructs process-step data for the various process steps in the slicing process, judges according to a predetermined rule whether each of the process steps is required to be executed, to obtain the process-step-to-be-executed data, executes sequentially the process steps in the process-step-to-be-executed data, and obtains the sum of the duration data of the process steps. By simulating the slicing process of the practical production, the method can obtain the time consumptions of the process steps and the sum of the durations for completing the slicing process, and calculate, by using historical data, by simulation, to obtain the time consumption of the slicing stage, to provide scientific support and calculation for man-machine operation analysis.

On the basis of the above steps of the method, further, the step of, according to the historical data, for the process-step-to-be-executed datum, assigning the duration data that individually correspond to the process-step-to-be-executed data comprises: according to the historical data, for the process-step-to-be-executed data, by using a principle of normal distribution, assigning duration data that individually correspond to the process-step-to-be-executed data.

The step of, according to the predetermined rule, obtaining the process-step-to-be-executed datum comprises: determining a confidence interval of each of the process steps in the process-step data; according to the confidence interval of the each of the process steps, assigning a probability to the each of the process steps; judging whether the probability of the each of the process steps is greater than or equal to a threshold that corresponds to the each of the process steps; if the probability is greater than or equal to the threshold, determining that a current process step is a process step to be executed; if the probability is less than the threshold, determining that a current process step is a process step not to be executed; and determining a set of the process steps to be executed that are obtained after the judging of the each of the process steps to be the process-step-to-be-executed data.

Particularly, how to determine whether the execution is required to be simulated will be particularly explained below with respect to the abnormal process steps (the broken-line replacing process step, the guide-pulley replacing process step, the home-roll replacing process step and the paying-off-wheel replacing process step). Because the normal process steps (the loading process step, the cutting process step, the discharging process step, the rinsing process step and the waiting process step) are indispensable actions to be executed in the operation of the slicer, all of the normal process steps are set to be definitely simulated to be triggered and executed; in other words, the corresponding probabilities may be always greater than or equal to the thresholds.

When the process step is the broken-line replacing process step, the step of, according to the predetermined rule, obtaining the process-step-to-be-executed datum comprises: determining the confidence interval of the broken-line replacing process step; according to the confidence interval of the broken-line replacing process step, assigning a line-breaking probability to the broken-line replacing process step; judging whether the line-breaking probability is greater than or equal to a line-breaking threshold; if the line-breaking probability is greater than or equal to the line-breaking threshold, determining that the broken-line replacing process step is a process step to be executed; and if the line-breaking probability is less than the line-breaking threshold, determining that the broken-line replacing process step is a process step not to be executed.

When the process step is the guide-pulley replacing process step, the step of, according to the predetermined rule, obtaining the process-step-to-be-executed datum comprises: determining the confidence interval of the guide-pulley replacing process step; according to the confidence interval of the guide-pulley replacing process step, assigning a guide-pulley-replacing probability to the guide-pulley replacing process step; judging whether the guide-pulley-replacing probability is greater than or equal to a guide-pulley-replacing threshold; if the guide-pulley-replacing probability is greater than or equal to the guide-pulley-replacing threshold, determining that the guide-pulley replacing process step is a process step to be executed; and if the guide-pulley-replacing probability is less than the guide-pulley-replacing threshold, determining that the guide-pulley replacing process step is a process step not to be executed.

When the process step is the home-roll replacing process step, the step of, according to the predetermined rule, obtaining the process-step-to-be-executed datum comprises:
determining the confidence interval of the home-roll replacing process step; according to the confidence interval of the home-roll replacing process step, assigning a home-roll-replacing probability to the home-roll replacing process step; judging whether the home-roll-replacing probability is greater than or equal to a home-roll-replacing threshold; if the home-roll-replacing probability is greater than or equal to the home-roll-replacing threshold, determining that the home-roll replacing process step is a process step to be executed; and if the home-roll-replacing probability is less than the home-roll-replacing threshold, determining that the home-roll replacing process step is a process step not to be executed.

When the process step is the paying-off-wheel replacing process step, the step of, according to the predetermined rule, obtaining the process-step-to-be-executed datum comprises: determining the confidence interval of the paying-off wheel replacing process step; according to the confidence interval of the paying-off wheel replacing process step, assigning a paying-off wheel-replacing probability to the paying-off wheel replacing process step; judging whether the paying-off-wheel-replacing probability is greater than or equal to a paying-off wheel-replacing threshold; if the paying-off-wheel-replacing probability is greater than or equal to the paying-off-wheel-replacing threshold, determining that the paying-off wheel replacing process step is a process step to be executed; and if the paying-off wheel-replacing probability is less than the paying-off-wheel-replacing threshold, determining that the paying-off wheel replacing process step is a process step not to be executed.

By using the above solution, the device, based on analogue simulation, by considering the abnormal process steps (the broken-line replacing process step, the guide-pulley replacing process step, the home-roll replacing process step and the paying-off-wheel replacing process step), by referring to the probabilities of the emerging of the abnormal process steps and the thresholds of the abnormal process steps, judges comprehensively whether each of the abnormal process steps is required to be triggered and executed, collects to the process-step-to-be-executed data, simulates to execute sequentially each of the process steps in the process-step-to-be-executed data, and finally obtains statistical duration data, which is the duration that is spent by one single slicing process from a silicon rod to silicon wafers. The device calculates, by using historical data, by simulation, to obtain the time consumption of the slicing stage, to provide scientific support and calculation for man-machine operation analysis.

The method will be explained below by using the particular embodiments of the actual scenes.

In the actual slicing process of silicon wafers, the normal process steps comprise loading, slicing, discharging, rising and waiting process steps, and under normal conditions, those process steps can be executed in the sequence of normal process steps. However, in the slicing process, abnormal conditions appear, so abnormal process steps include any one or combination of the following process steps: replacing the guide pulley, replacing the home roll, replacing the paying-off wheel and dealing with a broken line. The method and device for simulating a production duration of a silicon-wafer slicer will be explained in detail below with respect to the treatments of the four abnormal process steps individually.

### (1) Replacing the guide pulley

The guide pulley, as a wearing part, has a service life. By statistics according to the practical production, a guide-pulley-life dataset with a normal distribution can be obtained. When the abnormal process step is replacing the guide pulley, it is required to generate a guide-pulley-life random hour quantity, and a guide-pulley-life timer may be assigned. In the execution of the cutting process step, it is periodically judged whether the working-hour quantity of the guide-pulley-life timer has reached the guide-pulley-life random hour quantity. If yes, the guide-pulley replacing process step is entered. The process of replacing the guide pulley usually has a time distribution, and the simulation may, according to historical duration data, generate a random process-step hour quantity of the guide pulley replacement, and, after the guide-pulley replacing process step has ended, continue executing the cutting process step. If no, the execution of the cutting process step is continued.

### (2) Replacing the home roll

The home roll, as a wearing part, has a service life. By statistics according to the practical production, a home-roll-life dataset with a normal distribution can be obtained. When the abnormal process step is replacing the home roll, it is required to generate a home-roll-life random hour quantity, and a home-roll-life timer may be assigned. In the execution of the cutting process step, it is periodically judged whether the working-hour quantity of the home-roll-life timer has reached the home-roll-life random hour quantity. If yes, the abnormal process step of replacing the home roll is entered. Accordingly, the simulation, according to historical duration data, generates a random process-step hour quantity of the home roll replacement, and, after the abnormal process step of replacing the home roll has ended, continues executing the cutting process step. If no, the execution of the cutting process step is continued.

### (3) Replacing the paying-off wheel

The paying-off wheel, as a wearing part, has a service life. By statistics according to the practical production, a paying-off wheel-life dataset with a normal distribution can be obtained. When the abnormal process step is replacing the paying-off wheel, it is required to generate a paying-off-wheel-life random hour quantity, and a paying-off-wheel-life timer may be assigned. In the execution of the cutting process step, it is periodically judged whether the working-hour quantity of the paying-off-wheel-life timer has reached the paying-off wheel-life random hour quantity. If yes, the abnormal process step of replacing the paying-off wheel is entered. Accordingly, the simulation, according to historical duration data, generates a random process-step hour quantity of the paying-off wheel replacement, and, after the abnormal process step of replacing the paying-off wheel has ended, continues executing the cutting process step. If no, the execution of the cutting process step is continued.

### (4) Dealing with a broken line

When the abnormal process step is dealing with a broken line, the process comprises determining the confidence interval of the broken-line replacing process step; according to the confidence interval of the broken-line replacing process step, assigning a line-breaking probability to the broken-line replacing process step; judging whether the line-breaking probability is greater than or equal to a line-breaking threshold; if the line-breaking probability is greater than or equal to the line-breaking threshold, determining that the broken-line replacing process step is a process step to be executed; and if the line-breaking probability is less than the line-breaking threshold, determining that the broken-line replacing process step is a process step not to be executed.

The working procedure of the normal process steps may be loading-slicing-discharging-rinsing, or slicing-discharging-rinsing-loading, or rinsing-loading-slicing-discharging. The particular working procedure may be set according to the practical production flow.

When a preceding process step and a subsequent process step are being switched, if the preceding process step has already ended but the subsequent process step has not been ready, it may be required to wait. Therefore, a virtual-operator state machine, a virtual-slicer state machine and a virtual-auxiliary-equipment state machine that are involved in the slicing process are required to undergo the following process: when a preceding process step and a subsequent process step are being switched, judging whether all of the state of the virtual-operator state machine, the state of the virtual-slicer state machine and the state of the virtual-auxiliary-equipment state machine are "available"; if yes, performing the switching between the preceding process step and the subsequent process step; and if no, by a wait timer for global triggering, performing accumulative timing, recording the accumulated waiting time, till all of the three states are "available", stopping the timing, and performing the switching between the preceding process step and the subsequent process step. The virtual operators and the virtual slicers may form a grouping mode of M persons and N machines, wherein both of M and N are a natural number, and N is greater than or equal to M.

In order to realize further detailed statistical analysis on the simulation data, the step of starting up the virtual slicer comprises assigning and starting up one global timer to each of the process steps; and when each of the process steps is being executed, triggering the global timer corresponding to the process step, to perform accumulative timing to the process step. Accordingly, the particular conditions of each of the process steps in the simulation process can be recorded, for deep analysis in the future.

More particular embodiments will be given further below with respect to the above method. Firstly, regarding the stages of the process steps involved in the practical slicing production, including the normal process steps, the abnormal process steps and the waiting time between the preceding process steps and the subsequent process steps, the practical production generates statistical data with respect to them. The data distribution of the practical working-hour quantity of those process steps is generally a normal distribution. Therefore, when each of the process steps is being started up, especially, when each of the process steps is started to be executed, by a corresponding random working-hour-quantity generator, a random number having generally a normal distribution will be generated. The generator may be a corresponding function with a normal distribution, and the generated random process-step hour quantity falls within a data distribution interval within which the practical process-step working-hour quantity has generally a normal distribution.

For example, a process-step hour-quantity parameter table may be established in the computer simulation. The working-hour data that are obtained from field statistics are recorded into the parameter table established in the method, and are counted up and recorded in the field of the slicing production. The parameter setting is shown in Table 1:

**Table 1: statistic working-hour-data parameter table**

| process-step item | type of random distribution | mean value (min) | standard deviation (min) |
|---|---|---|---|
| slicing | normal distribution | 72 | 1 |
| discharging | normal distribution | 4 | 2 |
| loading | normal distribution | 4 | 2 |
| rinsing | normal distribution | 30 | 5 |
| dealing with a broken line | normal distribution | 60 | 30 |
| replacing the guide pulley | normal distribution | 5 | 3 |
| replacing the paying-off wheel | normal distribution | 40 | 10 |
| replacing the home roll | normal distribution | 180 | 15 |

According to the grouping mode, if a plurality of virtual slicers are used, the plurality of simulated virtual slicers are initialized, entered the operating state, and execute the sequence of the normal process steps according to the working procedure. The execution duration of each of the process steps may be recorded, and the process steps may be accumulated to obtain the total hour quantities of the process steps that are executed.

In the working-procedure circulating process of the process steps, when the cutting process step is being executed, it is required to periodically judge whether an unusual case happens, for example, judging unusual one time per minute. For example, regarding whether line breaking has happened, the comparison between a random line-breaking probability and a statistical practical line-breaking probability may be performed every minute. The particular mode may be: determining the confidence interval of the broken-line replacing process step;
according to the confidence interval of the broken-line replacing process step, assigning a line-breaking probability to the broken-line replacing process step;
judging whether the line-breaking probability is greater than or equal to a line-breaking threshold;
if the line-breaking probability is greater than or equal to the line-breaking threshold, determining that the broken-line replacing process step is a process step to be executed; and
if the line-breaking probability is less than the line-breaking threshold, determining that the broken-line replacing process step is a process step not to be executed.

In the practical simulation, if the random line-breaking probability exceeds the confidence interval of the happening of line breaking, that indicates that line breaking happens, and the line-breaking-treatment state is entered. After the execution of the process step of dealing with a broken line has completed, the execution of the current cutting process step is continued, till the execution of the process step has completed.

In the working procedure that is determined by the normal process steps, if the execution of the preceding process step reaches the random process-step hour quantity that is determined at the start of the process step, the execution of the process step has completed. Before entering the next process step, it is required to judge the states of the virtual slicer, the virtual operator and the virtual auxiliary equipment. If any one of the three is in a "not ready" state, waiting is required, and a single-time waiting time and/or an accumulated waiting time may be recorded. On the contrary, if all of the three are in a "ready" state, the next process step is entered.

According to the above-described simulation method, the working-procedure circulation of the plurality of process steps is executed within a preset simulation time period, and one round of the slicing task is completed within one circulation, which may be referred to as the completion of "one knife".

The present disclosure, by simulating the slicing process of crystalline silicon, and performing accurate simulation of the slicing, rinsing, loading, discharging and waiting and the various possible abnormal process steps in the silicon-wafer slicing process, modelizes and datamates the overall process of the field operation of the silicon-wafer slicing, and finally obtains accumulated duration data. In the simulation process, the statistical data in the field of silicon-wafer processing are approximated by using the historical data, thereby introducing the concept of "uncertainty" of the practical production into the simulation calculation. The present disclosure can solve the problems in the production management and organization pattern of solar-energy crystalline-silicon slicing, by accurate calculation by using the simulating model to simulate the practical problems in the slicing process, thereby providing scientific data support for the improvement of the working ratio of the device and the optimization of the personnel allocation, and realizing the improvement of the practical production efficiency according to the result of the simulation.

Fig. 2 shows a schematic diagram of the apparatus 02 for simulating a production duration of a silicon-wafer slicer. The apparatus 02 comprises:
a modeling module 21, configured for constructing a slicer simulating model, wherein the slicer simulating model comprises process-step data of the slicer, and the process-step data include: a loading process step, a cutting process step, a discharging process step, a rinsing process step, a waiting process step, a broken-line replacing process step, a guide-pulley replacing process step, a home-roll replacing process step and a paying-off wheel replacing process step;
a process-step determining module 22, configured for, in the slicer simulating model, according to a predetermined rule, obtaining a process-step-to-be-executed datum;
a process-duration generating module 23, configured for, according to historical data, for the process-step-to-be-executed datum, assigning duration data that individually correspond to the process-step-to-be-executed data, wherein the historical data include: historical duration data that individually correspond to the process-step data of the slicer; and
a process-step executing module 24, configured for executing sequentially the process steps in the process-step-to-be-executed data, and obtaining a sum of the duration data of the process steps.

Optionally, the process-duration generating module 21 is particularly configured for, according to the historical data, for the process-step-to-be-executed data, by using a principle of normal distribution, assigning duration data that individually correspond to the process-step-to-be-executed data.

Optionally, the process-step determining module 22 is particularly configured for determining a confidence interval of each of the process steps in the process-step data; according to the confidence interval of the each of the process steps, assigning a probability to the each of the process steps; judging whether the probability of the each of the process steps is greater than or equal to a threshold that corresponds to the each of the process steps; if the probability is greater than or equal to the threshold, determining that a current process step is a process step to be executed; if the probability is less than the threshold, determining that a current process step is a process step not to be executed; and determining a set of the process steps to be executed that are obtained after the judging of the each of the process steps to be the process-step-to-be-executed data.

Optionally, when the process step is the broken-line replacing process step, the process-step determining module 22 is particularly configured for determining the confidence interval of the broken-line replacing process step; according to the confidence interval of the broken-line replacing process step, assigning a line-breaking probability to the broken-line replacing process step; judging whether the line-breaking probability is greater than or equal to a line-breaking threshold; if the line-breaking probability is greater than or equal to the line-breaking threshold, determining that the broken-line replacing process step is a process step to be executed; and if the line-breaking probability is less than the line-breaking threshold, determining that the broken-line replacing process step is a process step not to be executed.

Optionally, when the process step is the guide-pulley replacing process step, the process-step determining module 22 is particularly configured for determining the confidence interval of the guide-pulley replacing process step; according to the confidence interval of the guide-pulley replacing process step, assigning a guide-pulley-replacing probability to the guide-pulley replacing process step; judging whether the guide-pulley-replacing probability is greater than or equal to a guide-pulley-replacing threshold; if the guide-pulley-replacing probability is greater than or equal to the guide-pulley-replacing threshold, determining that the guide-pulley replacing process step is a process step to be executed; and if the guide-pulley-replacing probability is less than the guide-pulley-replacing threshold, determining that the guide-pulley replacing process step is a process step not to be executed.

Optionally, when the process step is the home-roll replacing process step, the process-step determining module 22 is particularly configured for determining the confidence interval of the home-roll replacing process step; according to the confidence interval of the home-roll replacing process step, assigning a home-roll-replacing probability to the home-roll replacing process step; judging whether the home-roll-replacing probability is greater than or equal to a home-roll-replacing threshold; if the home-roll-replacing probability is greater than or equal to the home-roll-replacing threshold, determining that the home-roll replacing process step is a process step to be executed; and if the home-roll-replacing probability is less than the home-roll-replacing threshold, determining that the home-roll replacing process step is a process step not to be executed.

Optionally, when the process step is the paying-off-wheel replacing process step, the process-step determining module 22 is particularly configured for determining the confidence interval of the paying-off wheel replacing process step; according to the confidence interval of the paying-off wheel replacing process step, assigning a paying-off wheel-replacing probability to the paying-off wheel replacing process step; judging whether the paying-off wheel-replacing probability is greater than or equal to a paying-off wheel-replacing threshold; if the paying-off-wheel-replacing probability is greater than or equal to the paying-off-wheel-replacing threshold, determining that the paying-off wheel replacing process step is a process step to be executed; and if the paying-off wheel-replacing probability is less than the paying-off-wheel-replacing threshold, determining that the paying-off wheel replacing process step is a process step not to be executed.

The apparatus according to the present embodiment can be configured for executing the technical solutions of the above-described process embodiments, with similar principle of implementation and technical effects, which is not discussed here further.

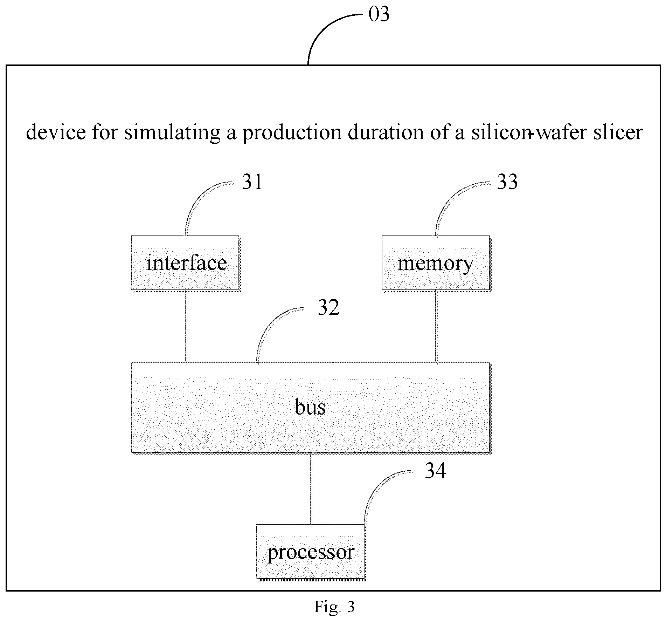

As shown in Fig. 3, the device 03 for simulating a production duration of a silicon-wafer slicer according to an embodiment of the present disclosure comprises: an interface 31, a bus 32, a memory 33 and a processor 34, the interface 31, the memory 33 and the processor 34 are connected via the bus 32, the memory 33 is configured to store an executable program, and the processor 34 is configured to execute the executable program to implement the following steps:
constructing a slicer simulating model, wherein the slicer simulating model comprises process-step data of the slicer, and the process-step data include: a loading process step, a cutting process step, a discharging process step, a rinsing process step, a waiting process step, a broken-line replacing process step, a guide-pulley replacing process step, a home-roll replacing process step and a paying-off wheel replacing process step;
in the slicer simulating model, according to a predetermined rule, obtaining a process-step-to-be-executed datum;
according to historical data, for the process-step-to-be-executed datum, assigning duration data that individually correspond to the process-step-to-be-executed data, wherein the historical data include: historical duration data that individually correspond to the process-step data of the slicer; and
executing sequentially the process steps in the process-step-to-be-executed data, and obtaining a sum of the duration data of the process steps.

The processor 34 is configured to execute the executable program to particularly implement the following steps:
according to the historical data, for the process-step-to-be-executed data, by using a principle of normal distribution, assigning duration data that individually correspond to the process-step-to-be-executed data.

The processor 34 is configured to execute the executable program to particularly implement the following steps:
determining a confidence interval of each of the process steps in the process-step data;
according to the confidence interval of the each of the process steps, assigning a probability to the each of the process steps;
judging whether the probability of the each of the process steps is greater than or equal to a threshold that corresponds to the each of the process steps;
if the probability is greater than or equal to the threshold, determining that a current process step is a process step to be executed;
if the probability is less than the threshold, determining that a current process step is a process step not to be executed; and
determining a set of the process steps to be executed that are obtained after the judging of the each of the process steps to be the process-step-to-be-executed data.

Optionally, the processor 34 is configured to execute the executable program to particularly implement the following steps:
determining the confidence interval of the broken-line replacing process step;
according to the confidence interval of the broken-line replacing process step, assigning a line-breaking probability to the broken-line replacing process step;
judging whether the line-breaking probability is greater than or equal to a line-breaking threshold;
if the line-breaking probability is greater than or equal to the line-breaking threshold, determining that the broken-line replacing process step is a process step to be executed; and
if the line-breaking probability is less than the line-breaking threshold, determining that the broken-line replacing process step is a process step not to be executed.

Optionally, the processor 34 is configured to execute the executable program to particularly implement the following steps:
determining the confidence interval of the guide-pulley replacing process step;
according to the confidence interval of the guide-pulley replacing process step, assigning a guide-pulley-replacing probability to the guide-pulley replacing process step;
judging whether the guide-pulley-replacing probability is greater than or equal to a guide-pulley-replacing threshold;
if the guide-pulley-replacing probability is greater than or equal to the guide-pulley-replacing threshold, determining that the guide-pulley replacing process step is a process step to be executed; and
if the guide-pulley-replacing probability is less than the guide-pulley-replacing threshold, determining that the guide-pulley replacing process step is a process step not to be executed.

Optionally, the processor 34 is configured to execute the executable program to particularly implement the following steps:
determining the confidence interval of the home-roll replacing process step;
according to the confidence interval of the home-roll replacing process step, assigning a home-roll-replacing probability to the home-roll replacing process step;
judging whether the home-roll-replacing probability is greater than or equal to a home-roll-replacing threshold;
if the home-roll-replacing probability is greater than or equal to the home-roll-replacing threshold, determining that the home-roll replacing process step is a process step to be executed; and
if the home-roll-replacing probability is less than the home-roll-replacing threshold, determining that the home-roll replacing process step is a process step not to be executed.

Optionally, the processor 34 is configured to execute the executable program to particularly implement the following steps:
determining the confidence interval of the paying-off wheel replacing process step;
according to the confidence interval of the paying-off wheel replacing process step, assigning a paying-off-wheel-replacing probability to the paying-off wheel replacing process step;
judging whether the paying-off-wheel-replacing probability is greater than or equal to a paying-off-wheel-replacing threshold;
if the paying-off-wheel-replacing probability is greater than or equal to the paying-off wheel-replacing threshold, determining that the paying-off wheel replacing process step is a process step to be executed; and
if the paying-off-wheel-replacing probability is less than the paying-off wheel-replacing threshold, determining that the paying-off wheel replacing process step is a process step not to be executed.

The device according to the present embodiment can be configured for executing the technical solutions of the above-described process embodiments, with similar principle of implementation and technical effects, which is not discussed here further.

The "one embodiment", "an embodiment" or "one or more embodiments" as used herein means that particular features, structures or characteristics described with reference to an embodiment are included in at least one embodiment of the present disclosure. Moreover, it should be noted that here an example using the wording "in an embodiment" does not necessarily refer to the same one embodiment.

The description provided herein describes many concrete details. However, it can be understood that the embodiments of the present disclosure may be implemented without those concrete details. In some of the embodiments, well-known processes, structures and techniques are not described in detail, so as not to affect the understanding of the description.

In the claims, any reference signs between parentheses should not be construed as limiting the claims. The word "comprise" does not exclude elements or steps that are not listed in the claims. The word "a" or "an" preceding an element does not exclude the existing of a plurality of such elements. The present disclosure may be implemented by means of hardware comprising several different elements and by means of a properly programmed computer. In unit claims that list several devices, some of those devices may be embodied by the same item of hardware. The words first, second, third and so on do not denote any order. Those words may be interpreted as names.

## Claims

1. A method for simulating a production duration of a silicon-wafer slicer, wherein the method comprises:
constructing a slicer simulating model, wherein the slicer simulating model comprises process-step data of the slicer, and the process-step data include: a loading process step, a cutting process step, a discharging process step, a rinsing process step, a waiting process step, a broken-line replacing process step, a guide-pulley replacing process step, a home-roll replacing process step and a paying-off wheel replacing process step;
in the slicer simulating model, according to a predetermined rule, obtaining a process-step-to-be-executed datum;
according to historical data, for the process-step-to-be-executed datum, assigning duration data that individually correspond to the process-step-to-be-executed data, wherein the historical data include: historical duration data that individually correspond to the process-step data of the slicer; and
executing sequentially the process steps in the process-step-to-be-executed data, and obtaining a sum of the duration data of the process steps;
wherein the step of, according to the historical data, for the process-step-to-be-executed datum, assigning the duration data that individually correspond to the process-step-to-be-executed data comprises:
according to the historical data, for the process-step-to-be-executed data, by using a principle of normal distribution, assigning duration data that individually correspond to the process-step-to-be-executed data; and
wherein the step of, according to the predetermined rule, obtaining the process-step-to-be-executed datum comprises:
determining a confidence interval of each of the process steps in the process-step data;
according to the confidence interval of the each of the process steps, assigning a probability to the each of the process steps;
judging whether the probability of the each of the process steps is greater than or equal to a threshold that corresponds to the each of the process steps;
if the probability is greater than or equal to the threshold, determining that a current process step is a process step to be executed;
if the probability is less than the threshold, determining that a current process step is a process step not to be executed; and
determining a set of the process steps to be executed that are obtained after the judging of the each of the process steps to be the process-step-to-be-executed data;
wherein the duration data refers to time consumptions of the process steps and the obtained sum of the duration data of the process steps refers to a sum of the durations for completing the slicing process, wherein the result of the simulation is applied in silicon-wafer slicing.

2. The method according to claim 1, wherein when the process step is the broken-line replacing process step, the step of, according to the predetermined rule, obtaining the process-step-to-be-executed datum comprises:
determining the confidence interval of the broken-line replacing process step;
according to the confidence interval of the broken-line replacing process step, assigning a line-breaking probability to the broken-line replacing process step;
judging whether the line-breaking probability is greater than or equal to a line-breaking threshold;
if the line-breaking probability is greater than or equal to the line-breaking threshold, determining that the broken-line replacing process step is a process step to be executed; and
if the line-breaking probability is less than the line-breaking threshold, determining that the broken-line replacing process step is a process step not to be executed.

3. The method according to claim 1, wherein when the process step is the guide-pulley replacing process step, the step of, according to the predetermined rule, obtaining the process-step-to-be-executed datum comprises:
determining the confidence interval of the guide-pulley replacing process step;
according to the confidence interval of the guide-pulley replacing process step, assigning a guide-pulley-replacing probability to the guide-pulley replacing process step;
judging whether the guide-pulley-replacing probability is greater than or equal to a guide-pulley-replacing threshold;
if the guide-pulley-replacing probability is greater than or equal to the guide-pulley-replacing threshold, determining that the guide-pulley replacing process step is a process step to be executed; and
if the guide-pulley-replacing probability is less than the guide-pulley-replacing threshold, determining that the guide-pulley replacing process step is a process step not to be executed.

4. The method according to claim 1, wherein when the process step is the home-roll replacing process step, the step of, according to the predetermined rule, obtaining the process-step-to-be-executed datum comprises:
determining the confidence interval of the home-roll replacing process step;
according to the confidence interval of the home-roll replacing process step, assigning a home-roll-replacing probability to the home-roll replacing process step;
judging whether the home-roll-replacing probability is greater than or equal to a home-roll-replacing threshold;
if the home-roll-replacing probability is greater than or equal to the home-roll-replacing threshold, determining that the home-roll replacing process step is a process step to be executed; and
if the home-roll-replacing probability is less than the home-roll-replacing threshold, determining that the home-roll replacing process step is a process step not to be executed.

5. The method according to claim 1, wherein when the process step is the paying-off-wheel replacing process step, the step of, according to the predetermined rule, obtaining the process-step-to-be-executed datum comprises:
determining the confidence interval of the paying-off wheel replacing process step;
according to the confidence interval of the paying-off wheel replacing process step, assigning a paying-off-wheel-replacing probability to the paying-off wheel replacing process step;
judging whether the paying-off-wheel-replacing probability is greater than or equal to a paying-off wheel-replacing threshold;
if the paying-off-wheel-replacing probability is greater than or equal to the paying-off wheel-replacing threshold, determining that the paying-off wheel replacing process step is a process step to be executed; and
if the paying-off-wheel-replacing probability is less than the paying-off-wheel-replacing threshold, determining that the paying-off wheel replacing process step is a process step not to be executed.

6. A device for simulating a production duration of a silicon-wafer slicer, wherein the device comprises an interface, a bus, a memory and a processor, the interface, the memory and the processor are connected via the bus, the memory is configured to store an executable program, and the processor is configured to execute the executable program to implement the following steps:
constructing a slicer simulating model, wherein the slicer simulating model comprises process-step data of the slicer, and the process-step data include: a loading process step, a cutting process step, a discharging process step, a rinsing process step, a waiting process step, a broken-line replacing process step, a guide-pulley replacing process step, a home-roll replacing process step and a paying-off wheel replacing process step;
in the slicer simulating model, according to a predetermined rule, obtaining a process-step-to-be-executed datum;
according to historical data, for the process-step-to-be-executed datum, assigning duration data that individually correspond to the process-step-to-be-executed data, wherein the historical data include: historical duration data that individually correspond to the process-step data of the slicer; and
executing sequentially the process steps in the process-step-to-be-executed data, and obtaining a sum of the duration data of the process steps;
wherein the processor is configured to execute the executable program to implement the following steps:
according to the historical data, for the process-step-to-be-executed data, by using a principle of normal distribution, assigning duration data that individually correspond to the process-step-to-be-executed data; and
wherein the processor is configured to execute the executable program to implement the following steps:
determining a confidence interval of each of the process steps in the process-step data;
according to the confidence interval of the each of the process steps, assigning a probability to the each of the process steps;
judging whether the probability of the each of the process steps is greater than or equal to a threshold that corresponds to the each of the process steps;
if the probability is greater than or equal to the threshold, determining that a current process step is a process step to be executed;
if the probability is less than the threshold, determining that a current process step is a process step not to be executed; and
determining a set of the process steps to be executed that are obtained after the judging of the each of the process steps to be the process-step-to-be-executed data;
wherein the duration data refers to time consumptions of the process steps and the obtained sum of the duration data of the process steps refers to a sum of the durations for completing the slicing process, wherein the device is configured to apply the result of the simulation in silicon-wafer slicing.

## Patentansprüche

1. Verfahren zur Simulation einer Produktionsdauer eines Siliziumwafer-Schneiders, wobei das Verfahren umfasst:
Konstruieren eines Schneidersimulationsmodells, wobei das Schneidersimulationsmodell Prozessschrittdaten des Schneiders umfasst und die Prozessschrittdaten beinhalten: einen Ladeprozessschritt, einen Schneidprozessschritt, einen Auswurfprozessschritt, einen Spülprozessschritt, einen Warteprozessschritt, einen Prozessschritt zum Ersetzen einer unterbrochenen Linie, einen Prozessschritt zum Ersetzen einer Führungsrolle, einen Prozessschritt zum Ersetzen einer Rücklaufrolle und einen Prozessschritt zum Ersetzen eines Abtragungsrads;
in dem Schneidersimulationsmodell gemäß einer vorbestimmten Richtlinie Erhalten eines Datums eines auszuführenden Prozessschrittes;
gemäß historischen Daten für das Datum des auszuführenden Prozessschrittes Zuweisen von Dauerdaten, die einzeln den Daten der auszuführenden Prozessschritte entsprechen, wobei die historischen Daten beinhalten: historische Dauerdaten, die einzeln den Prozessschrittdaten des Schneiders entsprechen; und
sequentielles Ausführen der Prozessschritte in den Daten der auszuführenden Prozessschritte und Erhalten einer Summe der Dauerdaten der Prozessschritte;
wobei der Schritt des Zuweisens der Dauerdaten, die einzeln den Daten der auszuführenden Prozessschritte entsprechen, gemäß den historischen Daten für das Datum des auszuführenden Prozessschrittes umfasst:
gemäß den historischen Daten für das Datum des auszuführenden Prozessschrittes durch Verwenden eines Normalverteilungsprinzips Zuweisen von Dauerdaten, die einzeln den Daten der auszuführenden Prozessschritte entsprechen; und
wobei der Schritt des Erhaltens des Datums des auszuführenden Prozessschrittes gemäß der vorbestimmten Richtlinie umfasst:
Bestimmen eines Konfidenzintervalls jedes der Prozessschritte in den Prozessschrittdaten;
gemäß dem Konfidenzintervall des jeden der Prozessschritte Zuweisen einer Wahrscheinlichkeit zu dem jeden der Prozessschritte;
Beurteilen, ob die Wahrscheinlichkeit des jeden der Prozessschritte größer als oder gleich einem Grenzwert ist, der dem jeden der Prozessschritte entspricht;
wenn die Wahrscheinlichkeit größer als oder gleich dem Grenzwert ist, Bestimmen, dass ein aktueller Prozessschritt ein auszuführender Prozessschritt ist;
wenn die Wahrscheinlichkeit kleiner als der Grenzwert ist, Bestimmen, dass ein aktueller Prozessschritt in nicht auszuführender Prozessschritt ist; und
Bestimmen eines Satzes der auszuführenden Prozessschritte, die nach de Beurteilen des jeden der Prozessschritte erhalten werden, als die Daten der auszuführenden Prozessschritte;
wobei die Dauerdaten sich auf Zeitverbräuche der Prozessschritte beziehen und die erhaltene Summe der Dauerdaten der Prozessschritte sich auf eine Summe der Dauern zum Abschließen des Schneidprozesses bezieht, wobei das Ergebnis der Simulation beim Siliziumwafer-Schneiden angewendet wird.

2. Verfahren nach Anspruch 1, wobei, wenn der Prozessschritt der Prozessschritt zum Ersetzen einer unterbrochenen Linie ist, der Schritt des Erhaltens des Datums des auszuführenden Prozessschrittes gemäß der vorbestimmten Richtlinie umfasst:
Bestimmen des Konfidenzintervalls des Prozessschrittes zum Ersetzen einer unterbrochenen Linie;
gemäß dem Konfidenzintervall des Prozessschrittes zum Ersetzen einer unterbrochenen Linie Zuweisen einer Linienunterbrechungswahrscheinlichkeit zu dem Prozessschritt zum Ersetzen einer unterbrochenen Linie;
Beurteilen, ob die Linienunterbrechungswahrscheinlichkeit größer als oder gleich einem Linienunterbrechungsgrenzwert ist;
wenn die Linienunterbrechungswahrscheinlichkeit größer als oder gleich dem Linienunterbrechungsgrenzwert ist, Bestimmen, dass der Prozessschritt zum Ersetzen einer unterbrochenen Linie ein auszuführender Prozessschritt ist; und
wenn die Linienunterbrechungswahrscheinlichkeit kleiner als der Linienunterbrechungsgrenzwert ist, Bestimmen, dass der Prozessschritt zum Ersetzen einer unterbrochenen Linie ein nicht auszuführender Prozessschritt ist.

3. Verfahren nach Anspruch 1, wobei, wenn der Prozessschritt der Prozessschritt zum Ersetzen einer Führungsrolle ist, der Schritt des Erhaltens des Datums des auszuführenden Prozessschrittes gemäß der vorbestimmten Richtlinie umfasst:
Bestimmen des Konfidenzintervalls des Prozessschrittes zum Ersetzen einer Führungsrolle;
gemäß dem Konfidenzintervall des Prozessschrittes zum Ersetzen einer Führungsrolle Zuweisen einer Führungsrollenersetzungswahrscheinlichkeit zu dem Prozessschritt zum Ersetzen einer Führungsrolle;
Beurteilen, ob die Führungsrollenersetzungswahrscheinlichkeit größer als oder gleich einem Führungsrollenersetzungsgrenzwert ist;
wenn die Führungsrollenersetzungswahrscheinlichkeit größer als oder gleich dem Führungsrollenersetzungsgrenzwert ist, Bestimmen, dass der Prozessschritt zum Ersetzen einer Führungsrolle ein auszuführender Prozessschritt ist; und
wenn die Führungsrollenersetzungswahrscheinlichkeit kleiner als der Führungsrollenersetzungsgrenzwert ist, Bestimmen, dass der Prozessschritt zum Ersetzen einer Führungsrolle ein nicht auszuführender Prozessschritt ist.

4. Verfahren nach Anspruch 1, wobei, wenn der Prozessschritt der Prozessschritt zum Ersetzen einer Rücklaufrolle ist, der Schritt des Erhaltens des Datums des auszuführenden Prozessschrittes gemäß der vorbestimmten Richtlinie umfasst:
Bestimmen des Konfidenzintervalls des Prozessschrittes zum Ersetzen einer Rücklaufrolle;
gemäß dem Konfidenzintervall des Prozessschrittes zum Ersetzen einer Rücklaufrolle Zuweisen einer Rücklaufrollenersetzungswahrscheinlichkeit zu dem Prozessschritt zum Ersetzen einer Rücklaufrolle;
Beurteilen, ob die Rücklaufrollenersetzungswahrscheinlichkeit größer als oder gleich einem Rücklaufrollenersetzungsgrenzwert ist;
wenn die Rücklaufrollenersetzungswahrscheinlichkeit größer als oder gleich dem Rücklaufrollenersetzungsgrenzwert ist, Bestimmen, dass der Prozessschritt zum Ersetzen einer Rücklaufrolle ein auszuführender Prozessschritt ist; und
wenn die Rücklaufrollenersetzungswahrscheinlichkeit kleiner als der Rücklaufrollenersetzungsgrenzwert ist, Bestimmen, dass der Prozessschritt zum Ersetzen einer Rücklaufrolle ein nicht auszuführender Prozessschritt ist.

5. Verfahren nach Anspruch 1, wobei, wenn der Prozessschritt der Prozessschritt zum Ersetzen eines Abtragungsrads ist, der Schritt des Erhaltens des Datums des auszuführenden Prozessschrittes gemäß der vorbestimmten Richtlinie umfasst:
Bestimmen des Konfidenzintervalls des Prozessschrittes zum Ersetzen eines Abtragungsrads;
gemäß dem Konfidenzintervall des Prozessschrittes zum Ersetzen eines Abtragungsrads Zuweisen einer Abtragungsradersetzungswahrscheinlichkeit zu dem Prozessschritt zum Ersetzen eines Abtragungsrads;
Beurteilen, ob die Abtragungsradersetzungswahrscheinlichkeit größer als oder gleich einem Abtragungsradersetzungsgrenzwert ist;
wenn die Abtragungsradersetzungswahrscheinlichkeit größer als oder gleich dem Abtragungsradersetzungsgrenzwert ist, Bestimmen, dass der Prozessschritt zum Ersetzen eines Abtragungsrads ein auszuführender Prozessschritt ist; und
wenn die Abtragungsradersetzungswahrscheinlichkeit kleiner als der Abtragungsradersetzungsgrenzwert ist, Bestimmen, dass der Prozessschritt zum Ersetzen eines Abtragungsrads ein nicht auszuführender Prozessschritt ist.

6. Vorrichtung zur Simulation einer Produktionsdauer eines Siliziumwafer-Schneiders, wobei die Vorrichtung eine Schnittstelle, einen Bus, einen Speicher und einen Prozessor umfasst, wobei die Schnittstelle, der Speicher und der Prozessor mittels des Busses verbunden sind, der Speicher dazu konfiguriert ist, ein ausführbares Programm zu speichern, und der Prozessor dazu konfiguriert ist, das ausführbare Programm auszuführen, um die folgenden Schritte zu implementieren:
Konstruieren eines Schneidersimulationsmodells, wobei das Schneidersimulationsmodell Prozessschrittdaten des Schneiders umfasst und die Prozessschrittdaten beinhalten: einen Ladeprozessschritt, einen Schneidprozessschritt, einen Auswurfprozessschritt, einen Spülprozessschritt, einen Warteprozessschritt, einen Prozessschritt zum Ersetzen einer unterbrochenen Linie, einen Prozessschritt zum Ersetzen einer Führungsrolle, einen Prozessschritt zum Ersetzen einer Rücklaufrolle und einen Prozessschritt zum Ersetzen eines Abtragungsrads;
in dem Schneidersimulationsmodell gemäß einer vorbestimmten Richtlinie Erhalten eines Datums eines auszuführenden Prozessschrittes;
gemäß historischen Daten für das Datum des auszuführenden Prozessschrittes Zuweisen von Dauerdaten, die einzeln den Daten der auszuführenden Prozessschritte entsprechen, wobei die historischen Daten beinhalten: historische Dauerdaten, die einzeln den Prozessschrittdaten des Schneiders entsprechen; und
sequentielles Ausführen der Prozessschritte in den Daten der auszuführenden Prozessschritte und Erhalten einer Summe der Dauerdaten der Prozessschritte;
wobei der Prozessor dazu konfiguriert ist, das ausführbare Programm auszuführen, um die folgenden Schritte zu implementieren:
gemäß den historischen Daten für das Datum des auszuführenden Prozessschrittes durch Verwenden eines Normalverteilungsprinzips Zuweisen von Dauerdaten, die einzeln den Daten der auszuführenden Prozessschritte entsprechen; und
wobei der Prozessor dazu konfiguriert ist, das ausführbare Programm auszuführen, um die folgenden Schritte zu implementieren:
Bestimmen eines Konfidenzintervalls jedes der Prozessschritte in den Prozessschrittdaten;
gemäß dem Konfidenzintervall des jeden der Prozessschritte Zuweisen einer Wahrscheinlichkeit zu dem jeden der Prozessschritte;
Beurteilen, ob die Wahrscheinlichkeit des jeden der Prozessschritte größer als oder gleich einem Grenzwert ist, der dem jeden der Prozessschritte entspricht;
wenn die Wahrscheinlichkeit größer als oder gleich dem Grenzwert ist, Bestimmen, dass ein aktueller Prozessschritt ein auszuführender Prozessschritt ist;
wenn die Wahrscheinlichkeit kleiner als der Grenzwert ist, Bestimmen, dass ein aktueller Prozessschritt in nicht auszuführender Prozessschritt ist; und
Bestimmen eines Satzes der auszuführenden Prozessschritte, die nach de Beurteilen des jeden der Prozessschritte erhalten werden, als die Daten der auszuführenden Prozessschritte;
wobei die Dauerdaten sich auf Zeitverbräuche der Prozessschritte beziehen und die erhaltene Summe der Dauerdaten der Prozessschritte sich auf eine Summe der Dauern zum Abschließen des Schneidprozesses bezieht, wobei die Vorrichtung dazu konfiguriert ist, das Ergebnis der Simulation beim Siliziumwafer-Schneiden anzuwenden.

## Revendications

1. Procédé permettant de simuler une durée de production d'une trancheuse de plaquettes de silicium, le procédé comprenant :
la construction d'un modèle de simulation de trancheuse, le modèle de simulation de trancheuse comprenant des données d'étapes de processus de la trancheuse, et les données d'étapes de processus comprenant : une étape de processus de chargement, une étape de processus de coupe, une étape de processus de déchargement, une étape de processus de rinçage, une étape de processus d'attente, une étape de processus de remplacement de fil cassé, une étape de processus de remplacement de poulie de guidage, une étape de processus de remplacement de rouleau principal et une étape de processus de remplacement de roue de désarmement ;
dans le modèle de simulation de trancheuse, selon une règle prédéterminée, l'obtention d'une donnée d'étape de processus à exécuter ;
selon des données historiques, pour la donnée d'étape de processus à exécuter, l'attribution de données de durée qui correspondent individuellement aux données d'étape de processus à exécuter, les données historiques comprenant : des données de durée historiques qui correspondent individuellement aux données d'étapes de processus de la trancheuse ; et
l'exécution séquentielle des étapes de processus dans les données d'étape de processus à exécuter, et l'obtention d'une somme des données de durée des étapes de processus ;
dans lequel l'étape, selon les données historiques, pour la donnée d'étape de processus à exécuter, d'attribution des données de durée qui correspondent individuellement aux données d'étape de processus à exécuter comprend :
selon les données historiques, pour les données d'étape de processus à exécuter, en utilisant un principe de distribution normale, l'attribution de données de durée qui correspondent individuellement aux données d'étape de processus à exécuter ; et
dans lequel l'étape, selon la règle prédéterminée, d'obtention de la donnée d'étape de processus à exécuter comprend :
la détermination d'un intervalle de confiance de chacune des étapes de processus dans les données d'étapes de processus ;
selon l'intervalle de confiance de chacune précitée des étapes de processus, l'attribution d'une probabilité à chacune précitée des étapes de processus ;
le fait de juger si la probabilité de chacune précitée des étapes de processus est supérieure ou égale à un seuil qui correspond à chacune précitée des étapes de processus ;
si la probabilité est supérieure ou égale au seuil, la détermination qu'une étape de processus actuelle est une étape de processus à exécuter ;
si la probabilité est inférieure au seuil, la détermination qu'une étape de processus actuelle est une étape de processus qui n'est pas à exécuter ; et
la détermination d'un ensemble des étapes de processus à exécuter qui sont obtenues après le jugement de chacune précitée des étapes de processus pour en faire les données d'étape de processus à exécuter ;
dans lequel les données de durée font référence à des consommations de temps des étapes de processus et la somme obtenue des données de durée des étapes de processus fait référence à une somme des durées pour achever le processus de tranchage, le résultat de la simulation étant appliqué dans le tranchage de plaquettes de silicium.

2. Procédé selon la revendication 1, dans lequel, lorsque l'étape de processus est l'étape de processus de remplacement de fil cassé, l'étape, selon la règle prédéterminée, d'obtention de la donnée d'étape de processus à exécuter comprend :
la détermination de l'intervalle de confiance de l'étape de processus de remplacement de fil cassé ;
selon l'intervalle de confiance de l'étape de processus de remplacement de fil cassé, l'attribution d'une probabilité de cassure de fil à l'étape de processus de remplacement de fil cassé ;
le fait de juger si la probabilité de cassure de fil est supérieure ou égale à un seuil de cassure de fil ;
si la probabilité de cassure de fil est supérieure ou égale au seuil de cassure de fil, la détermination que l'étape de processus de remplacement de fil cassé est une étape de processus à exécuter ; et
si la probabilité de cassure de fil est inférieure au seuil de cassure de fil, la détermination que l'étape de processus de remplacement de fil cassé est une étape de processus qui n'est pas à exécuter.

3. Procédé selon la revendication 1, dans lequel lorsque l'étape de processus est l'étape de processus de remplacement de poulie de guidage, l'étape, selon la règle prédéterminée, d'obtention de la donnée d'étape de processus à exécuter comprend :
la détermination de l'intervalle de confiance de l'étape de processus de remplacement de poulie de guidage ;
selon l'intervalle de confiance de l'étape de processus de remplacement de poulie de guidage, l'attribution d'une probabilité de remplacement de poulie de guidage à l'étape de processus de remplacement de poulie de guidage ;
le fait de juger si la probabilité de remplacement de poulie de guidage est supérieure ou égale à un seuil de remplacement de poulie de guidage ;
si la probabilité de remplacement de poulie de guidage est supérieure ou égale au seuil de remplacement de poulie de guidage, la détermination que l'étape de processus de remplacement de poulie de guidage est une étape de processus à exécuter ; et
si la probabilité de remplacement de poulie de guidage est inférieure au seuil de remplacement de poulie de guidage, la détermination que l'étape de processus de remplacement de poulie de guidage est une étape de processus qui n'est pas à exécuter.

4. Procédé selon la revendication 1, dans lequel lorsque l'étape de processus est l'étape de processus de remplacement de rouleau principal, l'étape, selon la règle prédéterminée, d'obtention de la donnée d'étape de processus à exécuter comprend :
la détermination de l'intervalle de confiance de l'étape de processus de remplacement de rouleau principal ;
selon l'intervalle de confiance de l'étape de processus de remplacement de rouleau principal, l'attribution d'une probabilité de remplacement de rouleau principal à l'étape de processus de remplacement de rouleau principal ;
le fait de juger si la probabilité de remplacement de rouleau principal est supérieure ou égale à un seuil de remplacement de rouleau principal ;
si la probabilité de remplacement de rouleau principal est supérieure ou égale au seuil de remplacement de rouleau principal, la détermination que l'étape de processus de remplacement de rouleau principal est une étape de processus à exécuter ; et
si la probabilité de remplacement de rouleau principal est inférieure au seuil de remplacement de rouleau principal, la détermination que l'étape de processus de remplacement de rouleau principal est une étape de processus qui n'est pas à exécuter.

5. Procédé selon la revendication 1, dans lequel lorsque l'étape de processus est l'étape de processus de remplacement de roue de désarmement, l'étape, selon la règle prédéterminée, d'obtention de la donnée d'étape de processus à exécuter comprend :
la détermination de l'intervalle de confiance de l'étape de processus de remplacement de roue de désarmement ;
selon l'intervalle de confiance de l'étape de processus de remplacement de roue de désarmement, l'attribution d'une probabilité de remplacement de roue de désarmement à l'étape de processus de remplacement de roue de désarmement ;
le fait de juger si la probabilité de remplacement de roue de désarmement est supérieure ou égale à un seuil de remplacement de roue de désarmement ;
si la probabilité de remplacement de roue de désarmement est supérieure ou égale au seuil de remplacement de roue de désarmement, la détermination que l'étape de processus de remplacement de roue de désarmement est une étape de processus à exécuter ; et
si la probabilité de remplacement de roue de désarmement est inférieure au seuil de remplacement de roue de désarmement, la détermination que l'étape de processus de remplacement de roue de désarmement est une étape de processus qui n'est pas à exécuter.

6. Dispositif permettant de simuler une durée de production d'une trancheuse de plaquettes de silicium, le dispositif comprenant une interface, un bus, une mémoire et un processeur, l'interface, la mémoire et le processeur étant connectés par l'intermédiaire du bus, la mémoire étant configurée pour stocker un programme exécutable, et le processeur étant configuré pour exécuter le programme exécutable pour implémenter les étapes suivantes :
la construction d'un modèle de simulation de trancheuse, le modèle de simulation de trancheuse comprenant des données d'étapes de processus de la trancheuse, et les données d'étapes de processus comprenant : une étape de processus de chargement, une étape de processus de coupe, une étape de processus de déchargement, une étape de processus de rinçage, une étape de processus d'attente, une étape de processus de remplacement de fil cassé, une étape de processus de remplacement de poulie de guidage, une étape de processus de remplacement de rouleau principal et une étape de processus de remplacement de roue de désarmement ;
dans le modèle de simulation de trancheuse, selon une règle prédéterminée, l'obtention d'une donnée d'étape de processus à exécuter ;
selon des données historiques, pour la donnée d'étape de processus à exécuter, l'attribution de données de durée qui correspondent individuellement aux données d'étape de processus à exécuter, les données historiques comprenant : des données de durée historiques qui correspondent individuellement aux données d'étapes de processus de la trancheuse ; et
l'exécution séquentielle des étapes de processus dans les données d'étape de processus à exécuter, et l'obtention d'une somme des données de durée des étapes de processus ;
le processeur étant configuré pour exécuter le programme exécutable pour implémenter les étapes suivantes :
selon les données historiques, pour les données d'étape de processus à exécuter, en utilisant un principe de distribution normale, l'attribution de données de durée qui correspondent individuellement aux données d'étape de processus à exécuter ; et
le processeur étant configuré pour exécuter le programme exécutable pour implémenter les étapes suivantes :
la détermination d'un intervalle de confiance de chacune des étapes de processus dans les données d'étapes de processus ;
selon l'intervalle de confiance de chacune précitée des étapes de processus, l'attribution d'une probabilité à chacune précitée des étapes de processus ;
le fait de juger si la probabilité de chacune précitée des étapes de processus est supérieure ou égale à un seuil qui correspond à chacune précitée des étapes de processus ;
si la probabilité est supérieure ou égale au seuil, la détermination qu'une étape de processus actuelle est une étape de processus à exécuter ;
si la probabilité est inférieure au seuil, la détermination qu'une étape de processus actuelle est une étape de processus qui n'est pas à exécuter ; et
la détermination d'un ensemble des étapes de processus à exécuter qui sont obtenues après le jugement de chacune précitée des étapes de processus pour en faire les données d'étape de processus à exécuter ;
dans lequel les données de durée font référence à des consommations de temps des étapes de processus et la somme obtenue des données de durée des étapes de processus fait référence à une somme des durées pour achever le processus de tranchage, le dispositif étant configuré pour appliquer le résultat de la simulation dans le tranchage de plaquettes de silicium.
